# EUROPÄISCHE PATENTSCHRIFT

(11) **EP 1 591 646 B1**
(45) Veröffentlichungstag und Bekanntmachung des Hinweises auf die Patenterteilung: **14.03.2007**
(21) Anmeldenummer: 05009168.5
(22) Anmeldetag: 27.04.2005
(51) Int. Cl.: F02D 23/00

(54) **Betriebsverfahren für einen Ottomotor mit Ventilüberlappung**
Operating method for Ottomotor with valve overlap
Procédé de fonctionnement d'un moteur à allumage commandé et croisement de soupapes

(30) Priorität: 27.04.2004 DE 102004020458
(43) Veröffentlichungstag der Anmeldung: 02.11.2005
(73) Patentinhaber: GM Global Technology Operations, Inc., Detroit, MI 48265-3000 (US)
(72) Erfinder: Horst, Stefan, 60389 Frankfurt (DE); Oswald, Helmut, 55234 Albig (DE)
(74) Vertreter: Strauss, Peter

(56) Entgegenhaltungen:
- EP-A- 1 243 779
- DE-A1- 2 942 326
- FR-A- 2 781 011
- GB-A- 672 485
- US-A1- 2003 051 466
- PATENT ABSTRACTS OF JAPAN Bd. 2003, Nr. 08, 6. August 2003 (2003-08-06) & JP 2003 120361 A (DAIHATSU MOTOR CO LTD), 23. April 2003 (2003-04-23)
- PATENT ABSTRACTS OF JAPAN Bd. 1998, Nr. 04, 31. März 1998 (1998-03-31) & JP 09 317520 A (NISSAN MOTOR CO LTD), 9. Dezember 1997 (1997-12-09)
- PATENT ABSTRACTS OF JAPAN Bd. 010, Nr. 286 (M-521), 27. September 1986 (1986-09-27) & JP 61 104112 A (MASAHIRO DAIBO), 22. Mai 1986 (1986-05-22)

## Beschreibung

Die vorliegende Erfindung betrifft ein Betriebsverfahren für einen aufgeladenen Ottomotor nach dem Oberbegriff des Anspruchs 1. Ein solches Verfahren ist z.B. aus DE 29 42 326 A1 bekannt.

Aufladung wird bei Ottomotoren zur Leistungssteigerung und auch zur Hubraumreduzierung (Downsizing) verwendet. Letzteres soll in erster Linie eine Reduzierung des Kraftstoffverbrauchs im Vergleich zu einem leistungsgleichen Saugmotor erreichen. Der Downsizing-Effekt führt aber bisher im Vergleich zu einem leistungsgleichen Saugmotor hauptsächlich nur im unteren Lastbereich zu günstigeren Verbrauchszahlen. Ein Grund dafür ist, dass bei einem Motor mit Aufladung häufiger als bei einem Saugmotor das Luft-Kraftstoff-Gemisch angefettet werden muss, um temperaturempfindliche Bauteile des Motors oder des Abgassystems vor Überhitzung zu schützen. Anfetten bedeutet, dass in die Brennkammer mehr Kraftstoff eingespritzt wird, als dem stöchiometrischen Luft-Kraftstoff-Verhältnis entspricht. Der überschüssige Kraftstoff wird in der Brennkammer zerstäubt, er kann mangels ausreichendem Sauerstoffangebot nur teilweise zu Kohlenmonoxid verbrennen, und dient so der Senkung der Temperatur des aus dem Motor ausgestoßenen Abgases und nachfolgend zur Kühlung des an den Motor angeschlossenen Abgassystems. Da die Verbrennungsgeschwindigkeit durch eine Gemischanfettung zunimmt, stellt sich ein niedrigerer Expansionsdruck ein, woraus eine weitere Temperaturabsenkung des Abgases resultiert.

Aufgabe der vorliegenden Erfindung ist, ein Betriebsverfahren für einen aufgeladenen Ottomotor zu schaffen, das es auf einfache Weise erlaubt, das Abgassystem des Ottomotors vor Überhitzung zu schützen.

Die Aufgabe wird gelöst durch ein Betriebsverfahren mit den Merkmalen des Anspruchs 1.

Die ohne Verbrennung ins Abgassystem durchgelassene Frischluft bewirkt eine Reduzierung der mittleren Temperatur des Abgasstroms im Abgassystem. Eine herkömmlicherweise zum Kühlen von temperaturkritischen Bauteilen des Motors oder Abgassystems bei hoher Motorlast erforderliche Gemischanfettung ist daher beim erfindungsgemäßen Verfahren überflüssig, was sich günstig auf den Kraftstoffverbrauch auswirkt.

Des Weiteren wird durch die Durchspülung der Brennkammer mit der Frischluft nach einem Verbrennungsvorgang in der Brennkammer verbliebenes inertes heißes Restgas verdrängt, was bei einem anschließenden Verbrennungsvorgang zu einer Verminderung der Klopfneigung des Luft-Kraftstoff-Gemischs und zu einer Erhöhung der Verbrennungsgeschwindigkeit führt. Diese beiden Effekte erlauben eine erhöhte konstruktive Verdichtungsauslegung des Motors, ohne die Klopfneigung ansteigen zu lassen. Je höher die Verdichtung ist, umso günstiger ist wiederum der Gesamtwirkungsgrad des Motors, d.h. auch dies wirkt sich positiv auf den Kraftstoffverbrauch aus.

Der Spülvorgang findet während einer Ventilüberschneidungsphase statt, d.h. nach der Phase des Ausstoßens des Abgases bleibt das Auslassventil offen, während das Einlassventil geöffnet wird. Zu Beginn des kurbelwinkelbezogenen Einlasstakts ist das Einlassventil ggf. bereits schon offen. Zu Beginn der Einlassphase des Gases, das zur Verbrennung im Zylinder verbleibt, bzw. zur Spülung dient, sind Einlass und Auslassventil geöffnet. Nachfolgend wird lediglich das Auslassventil geschlossen.

Vorzugsweise beginnt bei dem Spülvorgang die Phase der Ventilüberschneidung kurz bevor der Kolben in der Brennkammer seinen oberen Totpunkt erreicht. So kann die Geschwindigkeit der Öffnungsbewegung des Einlassventils niedrig gehalten werden und dennoch gewährleistet werden, dass der Öffnungsquerschnitt des Einlassventils maximal ist, wenn der Kolben - auf halbem Wege vom oberen zum unteren Totpunkt - seine maximale Geschwindigkeit erreicht. Wenn die Öffnungsbewegung kurz vor dem Erreichen des oberen Totpunkts beginnt, ist der Öffnungsquerschnitt des Einlassventils während des oberen Totpunktdurchgangs noch gering, und es wird kein Abgas in nennenswerter Menge in das Frischluftzufuhrsystem ausgetrieben. Es kann aber auch vorgesehen werden, dass das Einlassventil so weit vor Erreichen des oberen Totpunkts öffnet, dass ein Teil des in der Brennkammer enthaltenen Abgases in das Frischluftzufuhrsystem verdrängt wird. Dieses Abgas wird in der Einlassphase zusammen mit Frischluft wieder in die Brennkammer eingespeist, was einer Abgasrückführung gleichkommt.

Um eine deutliche Begrenzung des Aufladedrucks bzw. Kühlung des Abgases zu erreichen, sollte das Verhältnis von ohne Verbrennung in das Abgassystem strömender Luftmasse zu für die Verbrennung eingelassener Luftmasse mehr als 10 %, vorzugsweise sogar über 15 oder über 20 % betragen. Ein solcher Wert ist selbstverständlich von der Motorlast und Drehzahl abhängig; während bei hoher Motorlast und Drehzahl eine Frischlufteinspeisung im angegebenen Umfang zur Abgaskühlung wünschenswert oder nötig sein kann, kann bei niedrigerer Last und Drehzahl die Frischluftmenge niedriger oder gar gleich Null gesetzt werden.

Man kann das Verhältnis von ohne Verbrennung durchströmender zu an der Verbrennung teilnehmender Luftmasse auch in Beziehung zum Kompressionsvolumen oder Totvolumen des Zylinders setzen. Wenn das pro Taktzyklus durchgelassene Frischluftvolumen größer als das Totvolumen ist, dann ist garantiert, dass diese Frischluft nicht nur Restabgas aus dem Totvolumen des Zylinders in das Abgassystem verdrängt, sondern auch selber wenigstens teilweise das Abgassystem erreicht. Mit anderen Worten muss hierfür das Verhältnis der in der Phase gleichzeitiger Öffnung von Ein- und Auslassventilen in das Abgassystem strömenden Luftmasse zu der für die Verbrennung in die Brennkammer eingelassenen Luftmasse bei einer gegebenen Motorlast wenigstens so groß wie das Verdichtungsverhältnis des Motors sein.

Da eine Gemischanfettung zum Kühlen des Abgases oder von Motorbauteilen beim erfindungsgemäßen Betriebsverfahren nicht mehr erforderlich ist, sollte die Verbrennung zweckmäßigerweise bei jeder Last mit stöchiometrischem oder magerem Luft-Kraftstoff-Gemisch stattfinden, um den Verbrauch niedrig zu halten. Die Verwendung eines fetten Gemischs könnte außerdem dazu führen, dass unverbrannter Kraftstoff im Abgassystem mit der eingelassenen Frischluft nachreagiert, so dass es an Stelle einer mit der Anfettung bezweckten Kühlung des Abgassystems zu einer zusätzlich verstärkten Überhitzung käme.

Vorzugsweise wird das erfindungsgemäße Verfahren bei einem Ottomotor mit Direkteinspritzung des Kraftstoffs in die Brennkammer eingesetzt. Es wäre zwar auch möglich, den Kraftstoff in die Frischluftzufuhrleitung vor der Brennkammer einzuspritzen, doch muss dann der Einspritzort möglichst auch am Einlass der Brennkammer angeordnet und die Einspritzung zeitlich sehr genau gesteuert werden, um sicher zu stellen, dass keine Kraftstoffreste in der Zufuhrleitung zurückbleiben, die von der ohne Verbrennung durchströmenden Frischluft ins Abgassystem gespült werden könnten.

Weitere Merkmale und Vorteile der Erfindung ergeben sich aus der nachfolgenden Beschreibung eines Ausführungsbeispiels mit Bezug auf die beigefügten Figuren. Es zeigen:
- Fig. 1: eine schematische Darstellung eines Ottomotors, an dem das erfindungsgemäße Betriebsverfahren anwendbar ist; und
- Fig. 2: ein schematisches Druck-Zylindervolumen-Diagramm, das aus der Anwendung des Verfahrens resultiert.

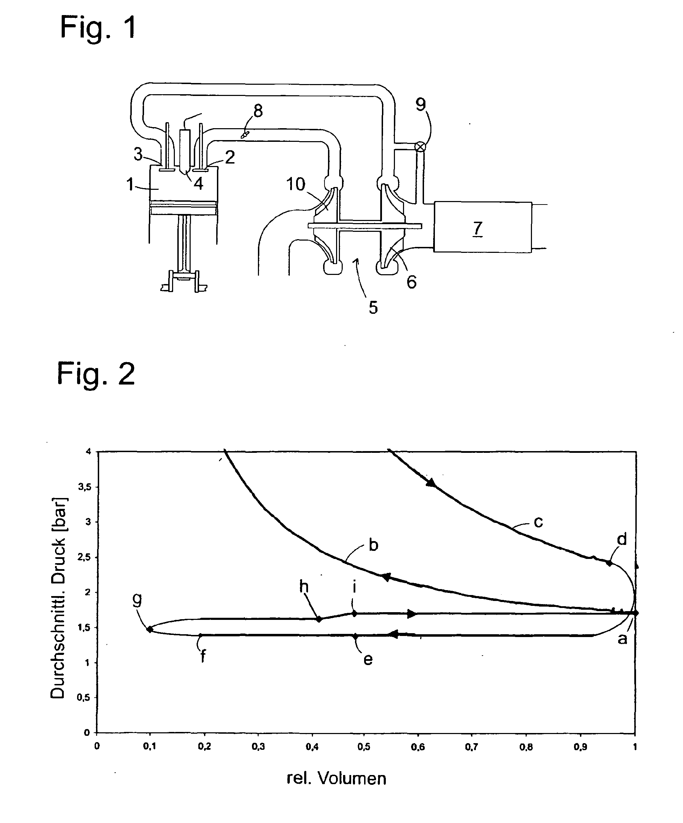

In Fig. 1 ist mit 1 eine einzelne Brennkammer eines Ottomotors bezeichnet. An der Brennkammer 1 sind wenigstens ein Einlassventil 2, wenigstens ein Auslassventil 3 sowie ein Kraftstoff-Einspritzventil 4 angeordnet, welches Kraftstoff direkt in die Brennkammer 1 zerstäubt. Dem Einlassventil 2 ist ein Aufladegerät 5 zum Vorverdichten von dem Motor zugeführter Frischluft vorgeschaltet. Das Aufladegerät 5 ist in der Figur exemplarisch als ein an sich bekannter Abgasturbolader dargestellt, der die Betriebsenergie zum Verdichten der Frischluft aus dem Abgasstrom bezieht; die Erfindung ist jedoch auf beliebige andere Typen von Ladegeräten ebenfalls anwendbar. Eine Drosselklappe 8 zum Dosieren der Frischluftzufuhr ist in einer Frischluftleitung zwischen einem Verdichter 10 des Aufladegeräts und dem Einlassventil 2 angeordnet.

Das Abgassystem des Motors umfasst im Anschluss an das Auslassventil 3 eine Turbine 6 des Turboladers 5, in der das Abgas den Verdichter 10 des Turboladers 5 antreibt, und stromabwärts von der Turbine 6 einen Abgaskatalysator 7 zum Abbau von im Abgasstrom enthaltenen Schadstoffen. In einer Abgasleitung zwischen dem Auslassventil 3 und der Turbine 6 kann ein so genanntes Waste-Gate 9 vorgesehen sein, ein Ventil, das es erlaubt, einen Teil des Abgasstroms aus der Brennkammer 1 unter Umgehung der Turbine 6 direkt in den Katalysator einzuspeisen und so die Leistung der Turbine 6 zu drosseln. Alternativ kann zu dem gleichen Zweck die Geometrie der Turbine 6 variabel sein.

Das Öffnen und Schließen der Einlass- und Auslassventile 2, 3 ist durch eine Nockenwelle (nicht dargestellt) gesteuert, an der in an sich bekannter Weise Nocken zum Antreiben von Öffnungs- und Schließbewegungen der Ventile 2, 3 gegeneinander winkelverstellbar sind, um die Kurbelwinkelintervalle, in denen die Ventile 2, 3 offen stehen, zu variieren. Die Verstellung der Nocken ist von einer (nicht dargestellten) elektronischen Motorsteuerschaltung gesteuert.

Fig. 2 zeigt schematisch den Zusammenhang zwischen relativem Volumen und Zylinderdruck in einer erfindungsgemäß betriebenen Brennkammer. Der Punkt a des Diagramms stellt Volumen und Druck Brennkammer am unteren Totpunkt, vor Beginn des Verdichtungstaktes, dar. Je nach Einspritzlage können hier infolge der direkten Einspritzung noch reine Luft und Abgasreste oder auch bereits Kraftstoff im Zylinder vorhanden sein. Das Ventil 3 ist geschlossen, und eine Aufwärtsbewegung des Kolbens bewirkt bei geschlossenem Einlassventil 2 in an sich bekannter Weise einen Anstieg des Druckes in der Verdichtungsphase b, bis in einer Stellung des Kolbens nahe am oberen Totpunkt, bei einem außerhalb der Skala des Diagramms liegenden Druck, das Gemisch gezündet wird. Der resultierende Druckanstieg treibt in an sich bekannter Weise den Motor an, und Druck und Volumen entwickeln sich entlang der Expansionskurve c, bis kurz vor dem unteren Totpunkt, am Punkt d des Diagramms, das Auslassventil 3 sich zu öffnen beginnt und der Druck im Laufe der Überwindung des Totpunktes auf den Wert des Abgasgegendruckes abfällt, der, von Druckverlusten am Auslassventil 3 abgesehen, im Wesentlichen dem Druck des Abgases am Einlass der Turbine 6 entspricht. Die Öffnungsbewegung des Auslassventils 3 erstreckt sich über einen Kurbelwellenwinkel von wenigstens 100°, hier größer 120°, d. h. das Auslassventil erreicht seinen maximalen Öffnungsquerschnitt etwa in der Mitte der Aufwärtsbewegung des Kolbens, am Punkt e, kurz nachdem der Kolben seine maximale Geschwindigkeit erreicht hat.

Während sich der Kolben aufwärts bewegt, wird das Abgas bis auf eine Restmenge, die dem Volumen der Brennkammer am oberen Totpunkt g entspricht, aus der Brennkammer verdrängt. Kurz vor Erreichen des oberen Totpunktes g, am Punkt f des Diagramms, beginnt das Einlassventil 2, sich zu öffnen, wobei allerdings ein freier Querschnitt des Einlassventils, der den Zutritt von Frischluft in den Zylinder in nennenswertem Umfang ermöglicht, erst nach dem Durchgang durch den oberen Totpunkt g vorhanden ist. Das Auslassventil 3 bleibt auch nach dem Durchgang durch den Totpunkt g noch offen, so dass verdichtete Frischluft durch die Brennkammer 1 unmittelbar ins Abgassystem gelangt. Indem so dem Abgas kalte Frischluft beigemengt wird, reduziert sich die Temperatur des Gasgemischs im Abgassystem sowie im Brennraum, und eine Überhitzung von temperaturempfindlichen Teilen des Motors, der Turbine 6, des Abgaskatalysators 7 oder anderer Teile des Abgassystems wird vermieden. Es ist daher nicht notwendig, zum Kühlen des Abgassystems das Luft-Kraftstoff-Gemisch anzufetten.

An einem Punkt h, während der Ansaugbewegung des Kolbens, wird das Auslassventil 3 geschlossen. Der Schließzeitpunkt muss von der Motorsteuerschaltung so festgelegt sein, dass die Zeit, die nach dem Schließen des Auslassventils 3 zur Verfügung steht, bis bei als weiterhin offen angenommenem Einlassventil 2 der Frischluftzustrom zum Erliegen kommt, ausreicht, um eine für eine verlangte Motorleistung benötigte Luftmenge in die Brennkammer einzuspeisen. (Der Zeitpunkt "Einlassventil schließt" liegt in der Praxis kurz nach dem Durchgang des Kolbens durch den unteren Totpunkt, weil aufgrund der Massenträgheit der Frischluft deren Zustrom in die Brennkammer noch kurze Zeit weitergeht, nachdem der Kolben den unteren Totpunkt passiert hat.) Wie man an dem Diagramm sieht, ist die zum Einspeisen der benötigten Luftmenge benötigte Zeitspanne jedoch nur ein kleiner Bruchteil der Taktdauer; es genügt die Trajektorie zwischen den Punkten h und i, um nach dem Schließen des Auslassventils 3 den Druck in der Brennkammer an den der am Einlassventil 2 anstehenden Frischluft anzugleichen.

Durch geeignete Auswahl des Schließzeitpunktes des Auslassventils 3 kann somit das Verhältnis von Gesamt-Frischluftdurchsatz des Motors zur in der Brennkammer für eine Verbrennung verbleibender Frischluft bzw. das Mischungsverhältnis von Frischluft zu Verbrennungsabgasen im Abgassystem variiert und auf diese Weise die Temperatur des Abgassystems gesteuert werden. Solange der Motor bei niedriger Last arbeitet, und keine Überhitzung zu erwarten ist, kann der Motor in herkömmlicher Weise mit einem stöchiometrischen oder leicht mageren Verhältnis λ von Gesamtluft- zu Kraftstoffmasse betrieben werden. Erst wenn bei einer hohen Motorlast eine Überhitzung möglich wird, wird eine Überlappung der Phasen, in denen Einlass- bzw. Auslassventil geöffnet sind, herbeigeführt.

Um das Ausmaß der Überlappung zu steuern, kann vorgesehen werden, dass die Steuerschaltung in beliebiger bekannter Weise die Last des Motors erfasst und mit Hilfe eines vorgegebenen, eventuell empirisch ermittelten Modells eine aus der erfassten Last resultierende Temperatur des Abgassystems berechnet und eine Überlappung der Öffnungsphasen von Ein- und Auslassventilen herbeiführt, wenn die berechnete Temperatur eine Grenze erreicht, oberhalb derer Schäden an hitzeempfindlichen Teilen des Motors oder des Abgassystems wie etwa der Turbine oder des aktiven Materials des Katalysators zu befürchten sind. Selbstverständlich kann eine solche Temperatur auch unmittelbar an einem gefährdeten Teil des Abgassystems gemessen und anhand der so gemessenen Temperatur die Überlappung der Öffnungsphasen gesteuert werden.

In dem erfindungsgemäßen Betriebsverfahren wird zum Schutz von Bauteilen insbesondere mit einem Verbrennungs-Luft-Kraftstoff-Verhältnis von ca. λ = 1,05 gearbeitet.

Ein Nebeneffekt des gleichzeitigen Öffnens von Ein- und Auslassventilen ist, dass Restgase der Verbrennung, die bei Betrieb des Motors ohne oder mit geringer Überschneidung der Öffnungsphasen von Ein- und Auslassventilen in der Brennkammer verbleiben, weil deren Volumen auch am oberen Totpunkt nicht verschwindet, aus der Brennkammer herausgespült und durch Frischluft ersetzt werden. Bereits dies vergrößert die bei gegebenem Einlassdruck in die Brennkammer aufgenommene Sauerstoffmenge. Hinzu kommt, dass die Frischluft kälter ist als im Fall ohne Durchspülung, was ebenfalls die in die Brennkammer aufgenommene Sauerstoffmenge erhöht. Dies führt zu einer Erhöhung der Verbrennungsgeschwindigkeit, die sich leistungssteigernd bzw. verbrauchssenkend auswirkt, und zu einer Verschiebung der Klopfgrenze, die ein höheres Verdichtungsverhältnis als bei einem herkömmlichen, ungespülten Ottomotor ermöglicht. Mit dem erfindungsgemäßen Verfahren kann ein solcher Motor daher mit einem Verdichtungsverhältnis über dem heutzutage typischen Wert von ca. 10 für verbrauchsorientiert ausgelegte, aufgeladene, direkteinspritzende Ottomotoren betrieben werden.

Um die Wirkung der Spülung mit Frischluft auf die Verbrennung im Motor voll auszunutzen, ist es wünschenswert, dass die in der Überlappungsphase durchgespülte Frischluftmenge wenigstens ausreicht, um das Restgas der vorhergehenden Verbrennung aus der Brennkammer zu verdrängen. D.h., wenn das Totvolumen der Brennkammer zu ihrem maximalen Volumen im Verhältnis von ca. 1:10 steht, wie in Fig. 2 am Punkt e erkennbar, d.h. wenn die Verdichtung der Brennkammer ca. 1:10 beträgt, dann sollte das Verhältnis der durchgespülten Luftmasse zur für die Verbrennung in die Brennkammer eingelassenen Luftmasse ebenfalls wenigstens 10 %, besser mehr, betragen.

### Bezugszeichenliste

- Brennkammer: 1
- Einlassventil: 2
- Auslassventil: 3
- Kraftstoff-Einspritzventil: 4
- Aufladegerät: 5
- Turbine: 6
- Abgaskatalysator: 7
- Drosselklappe: 8
- Waste-Gate: 9
- Verdichter: 10

## Patentansprüche

1. Betriebsverfahren für einen aufgeladenen Ottomotor, bei dem nach erfolgter Kraftstoffverbrennung in einer Brennkammer (1) des Motors ein Auslassventil (3) der Brennkammer (1) geöffnet wird, um das Abgas der Verbrennung aus der Brennkammer (1) in ein Abgassystem (7) auszustoßen, und ein Einlassventil (2) geöffnet wird, um vorverdichtete Frischluft für eine anschließende Verbrennung in die Brennkammer (1) einzulassen, wobei in einer Phase (f-h) Einlassventil (2) und Auslassventil (3) gleichzeitig geöffnet sind, um vorverdichtete Frischluft **durch** die Brennkammer (1) ohne Verbrennung in das Abgassystem (6, 7) strömen zu lassen, **dadurch gekennzeichnet, dass** eine Temperatur des sich an das Auslassventil (3) anschließenden Abgassystems (6, 7) gemessen oder modelliert und die Dauer der Phase (f-h) der gleichzeitigen Öffnung anhand der so erhaltenen Temperatur geregelt wird.

2. Betriebsverfahren nach Anspruch 1, **dadurch gekennzeichnet, dass** sich die Phase (f-h) der gleichzeitigen Öffnung an eine Phase (d-f) des Ausstoßens von Abgas aus der Brennkammer (1) unmittelbar anschließt und/oder eine Phase (h-a) des Einlassens von Frischluft für die Verbrennung unmittelbar auf die Phase (f-h) der gleichzeitigen Öffnung folgt.

3. Betriebsverfahren nach Anspruch 1 oder 2, **dadurch gekennzeichnet, dass** die Phase (f-h) der gleichzeitigen Öffnung vor Erreichen des oberen Totpunktes (g) durch den Kolben in der Brennkammer (1) beginnt.

4. Betriebsverfahren nach einem der vorhergehenden Ansprüche, **dadurch gekennzeichnet, dass** das Verhältnis der in der Phase (f-h) gleichzeitiger Öffnung in das Abgassystem (6, 7) strömenden Luftmasse zu der für die Verbrennung in die Brennkammer (1) eingelassenen Luftmasse bei einer gegebenen Motorlast mehr als 1:10, besser mehr als 1,5:10 beträgt.

5. Betriebsverfahren nach einem der vorhergehenden Ansprüche, **dadurch gekennzeichnet, dass** das Verhältnis der in der Phase (f-h) gleichzeitiger Öffnung in das Abgassystem (6, 7) strömenden Luftmasse zu der für die Verbrennung in die Brennkammer (1) eingelassenen Luftmasse bei einer gegebenen Motorlast wenigstens so groß wie das Verdichtungsverhältnis des Motors ist.

6. Betriebsverfahren nach einem der vorhergehenden Ansprüche, **dadurch gekennzeichnet, dass** die Verbrennung bei jeder Last mit stöchiometrischem oder magerem Luft-Kraftstoff-Gemisch stattfindet.

7. Betriebsverfahren nach einem der vorhergehenden Ansprüche, **dadurch gekennzeichnet, dass** die Dauer der Phase (f-h) der gleichzeitigen Öffnung abhängig von der Motorlast und/oder Motordrehzahl gewählt wird.

8. Betriebsverfahren nach Anspruch 7, **dadurch gekennzeichnet, dass** der Anteil der Dauer der Phase (f-h) der gleichzeitigen Öffnung an der Dauer des Betriebszyklus des Motors umso größer gewählt wird, je höher die Last und/oder Motordrehzahl ist.

9. Betriebsverfahren nach einem der vorhergehenden Ansprüche, **dadurch gekennzeichnet, dass** es bei einem Ottomotor mit Direkteinspritzung angewendet wird.

10. Betriebsverfahren nach einem der vorhergehenden Ansprüche, **dadurch gekennzeichnet, dass** es bei einem Ottomotor mit einem Verdichtungsverhältnis von über 10 eingesetzt wird.

## Claims

1. Operating method for a supercharged spark-ignition engine, in which after fuel combustion in a combustion chamber (1) of the engine a discharge valve (3) of the combustion chamber (1) is opened in order to discharge the exhaust gas of the combustion process from the combustion chamber (1) into an exhaust gas system (7) and an intake valve (2) is opened in order to admit pre-compressed fresh air for a subsequent combustion process into the combustion chamber (1), wherein in a phase (f-h) intake valve (2) and discharge valve (3) are open simultaneously in order to allow pre-compressed fresh air to flow through the combustion chamber (1) without combustion into the exhaust gas system (6, 7), **characterized in that** a temperature of the exhaust gas system (6, 7) adjoining the discharge valve (3) is measured or modelled and the temperature thus obtained is used to control the duration of the phase (f-h) of simultaneous opening.

2. Operating method according to claim 1, **characterized in that** the phase (f-h) of simultaneous opening immediately follows a phase (d-f) of discharging exhaust gas from the combustion chamber (1) and/or a phase (h-a) of admitting fresh air for the combustion process immediately follows the phase (f-h) of simultaneous opening.

3. Operating method according to claim 1 or 2, **characterized in that** the phase (f-h) of simultaneous opening starts before attainment of the top dead centre (g) by the piston in the combustion chamber (1).

4. Operating method according to one of the preceding claims, **characterized in that** the ratio of the air mass flowing into the exhaust gas system (6, 7) in the phase (f-h) of simultaneous opening to the air mass admitted into the combustion chamber (1) for the combustion process, given a defined engine load, is more than 1:10, preferably more than 1.5:10.

5. Operating method according to one of the preceding claims, **characterized in that** the ratio of the air mass flowing into the exhaust gas system (6, 7) in the phase (f-h) of simultaneous opening to the air mass admitted into the combustion chamber (1) for the combustion process, given a defined engine load, is at least as high as the compression ratio of the engine.

6. Operating method according to one of the preceding claims, **characterized in that** the combustion for any load occurs with a stoichiometric or lean air-fuel mixture.

7. Operating method according to one of the preceding claims, **characterized in that** the duration of the phase (f-h) of simultaneous opening is selected in dependence upon the engine load and/or engine speed.

8. Operating method according to claim 7, **characterized in that** the duration of the phase (f-h) of simultaneous opening as a fraction of the duration of the operating cycle of the engine is selected all the greater, the higher the load and/or speed of the engine.

9. Operating method according to one of the preceding claims, **characterized in that** it is used with a direct-injection spark-ignition engine.

10. Operating method according to one of the preceding claims, **characterized in that** it is used with a spark-ignition engine having a compression ratio of above 10.

## Revendications

1. Procédé de fonctionnement pour un moteur à allumage commandé suralimenté, dans lequel, après combustion du carburant effectuée dans une chambre de combustion (1) du moteur, une soupape d'échappement (3) de la chambre de combustion (1) est ouverte pour expulser le gaz d'échappement de la combustion, de la chambre de combustion (1) jusqu'à un système d'échappement (7), et une soupape d'admission (2) est ouverte pour admettre de l'air frais précomprimé pour une combustion ultérieure dans la chambre de combustion (1), la soupape d'admission (2) et la soupape d'échappement (3) étant ouvertes en même temps dans une phase (f-h), pour faire circuler l'air frais précomprimé à travers la chambre de combustion (1) sans combustion dans le système d'échappement (6,7), **caractérisé en ce qu'**une température du système d'échappement raccordé à la soupape d'échappement (3) est mesurée ou modélisée, et la durée de la phase (f-h) de l'ouverture simultanée est réglée en fonction de la température ainsi obtenue.

2. Procédé de fonctionnement selon la revendication 1, **caractérisé en ce que** la phase (f-h) d'ouverture simultanée fait suite directement à une phase (d-f) d'expulsion de gaz d'échappement hors de la chambre de combustion (1), et/ou une phase (h-a) d'admission d'air frais pour la combustion succède directement à la phase (f-h) d'ouverture simultanée.

3. Procédé de fonctionnement selon la revendication 1 ou 2, **caractérisé en ce que** la phase (f-h) d'ouverture simultanée commence avant que le point mort haut (g) ne soit atteint par le piston dans la chambre de combustion (1).

4. Procédé de fonctionnement selon l'une quelconque des revendications précédentes, **caractérisé en ce que** le rapport de la masse d'air circulant dans le système d'échappement (6,7) dans la phase (f-h) d'ouverture simultanée, sur la masse d'air admise dans la chambre de combustion (1) pour la combustion, s'élève, pour une charge de moteur donnée, à plus de 1:10, mieux, à plus de 1,5:10.

5. Procédé de fonctionnement selon l'une quelconque des revendications précédentes, **caractérisé en ce que** le rapport de la masse d'air circulant dans le système d'échappement (6,7) dans la phase (f-h) d'ouverture simultanée, sur la masse d'air admise dans la chambre de combustion (1) pour la combustion, est, pour une charge moteur donnée, au moins aussi élevé que le rapport de compression du moteur.

6. Procédé de fonctionnement selon l'une quelconque des revendications précédentes, **caractérisé en ce que** la combustion a lieu, pour chaque charge, avec un mélange air-carburant stoechiométrique ou pauvre.

7. Procédé de fonctionnement selon l'une quelconque des revendications précédentes, **caractérisé en ce que** la durée de la phase (f-h) d'ouverture simultanée est choisie en fonction de la charge moteur et/ou du régime moteur.

8. Procédé de fonctionnement selon la revendication 7, **caractérisé en ce que** la proportion de la durée de la phase (f-h) d'ouverture simultanée par rapport à la durée du cycle de fonctionnement du moteur est choisie d'autant plus élevée que la charge et/ou le régime du moteur est élevé(e).

9. Procédé de fonctionnement selon l'une quelconque des revendications précédentes, **caractérisé en ce qu'**il est utilisé avec un moteur à allumage commandé à injection directe.

10. Procédé de fonctionnement selon l'une quelconque des revendications précédentes, **caractérisé en ce qu'**il est mis en oeuvre avec un moteur à allumage commandé présentant un rapport de compression supérieur à 10.
